# EUROPEAN PATENT APPLICATION

(11) **EP 4 832 137 A1**
(43) Date of publication of application: **28.10.2026**
(21) Application number: 25880354.3
(22) Date of filing: 16.10.2025
(51) Int. Cl.: H01M 10/0567, H01M 10/052, H01M 4/36, H01M 4/525, H01M 4/505, H01M 4/58, H01M 4/587, H01M 4/02

(54) **LITHIUM SECONDARY BATTERY**

(30) Priority: 16.10.2024 KR 20240141281
(71) Applicant: LG Energy Solution, Ltd., Seoul 07335 (KR)
(72) Inventor: KIM, Min Soo, Daejeon 34122 (KR); TAKEUCHI, Takashi, Daejeon 34122 (KR); KIM, Na Yeon, Daejeon 34122 (KR); RUBHA, Ponraj, Daejeon 34122 (KR)
(74) Representative: Goddar, Heinz J.
(86) International application number: PCT/KR2025/016312
(87) International publication number: WO 2026/084471

(57) **Abstract**

A lithium secondary battery according to the present disclosure is a lithium secondary battery including a positive electrode; a negative electrode; a separator; and an electrolyte, wherein the electrolyte includes 1,3-propane sultone (PS) and/or lithium bis(oxalate)borate (LiBOB) as a main additive, and a full charge voltage exceeds 4.35V.

## Description

### [Technical field]

This application claims the benefit of Korean Patent Application No. 10-2024-0141281, filed on October 16, 2024, the disclosure of which is incorporated herein by reference.

The present disclosure relates to a lithium secondary battery.

### [Background]

In lithium secondary batteries, olivine-structured compounds have a voltage of approximately 3.5V versus lithium and a high volumetric density of 3.6 g/cm³, with a theoretical capacity of 170 mAh/g. These materials exhibit superior high-temperature stability compared to cobalt (Co) and are widely used as positive electrode active materials.

Recently, attempts have been made to use LMFP, which contains manganese among olivine-structured compounds, as a positive electrode active material. LMFP has a high average operating voltage, which provides the effect of improving energy density.

Currently, general lithium secondary batteries typically operate at 4.35V or below, and when operated at higher potentials, energy retention rate decreases.

### [Summary]

### [Technical Problem]

The technical problem to be solved by the present disclosure is to mitigate the decrease in energy retention rate when a lithium secondary battery is operated at high potential.

The technical problem to be solved by the present disclosure is to provide a lithium secondary battery capable of instantiating high energy density and high discharge voltage.

Furthermore, the technical problem to be solved by the present disclosure is to provide a lithium secondary battery capable of instantiating high energy density while having excellent high-temperature safety.

### [Technical Solution]

A lithium secondary battery according to exemplary embodiments of the present disclosure includes a positive electrode; a negative electrode; a separator; and an electrolyte, wherein the electrolyte includes 1,3-propane sultone (PS) and/or lithium bis(oxalate)borate (LiBOB) as a main additive, and a full charge voltage exceeds 4.35V.

A lithium secondary battery according to exemplary embodiments may have the full charge voltage in a range of 4.4V to 4.5V.

In exemplary embodiments, the positive electrode includes a first positive electrode active material and a second positive electrode active material, wherein the first positive electrode active material is a lithium composite metal oxide having a layered crystal structure, and the second positive electrode active material is a lithium transition metal phosphate having an olivine structure.

In exemplary embodiments, the first positive electrode active material may be a compound represented by the following Chemical Formula 1.

[Chemical Formula 1] Li_{1+y}NiₚCo_{q}MnᵣM¹_{-(p+q+r)}O_{2-z}A_{z}

In Chemical Formula 1,
M¹ is at least one selected from the group consisting of Cu, Ti, Mg, Al, Pt, and Zr, A is an oxygen-substituted halogen, and 0≤y≤0.5, 0.4≤p≤1, 0≤q≤0.6, 0≤r≤0.6, 0.9≤p+q+r≤1, and 0≤z≤0.001.

In exemplary embodiments, the second positive electrode active material may be a compound represented by the following Chemical Formula 2.

[Chemical Formula 2] Li₁₊ₐMₓFe₁₋ₓ(PO_{4-b})X_{b}

In Chemical Formula 2,
M is at least one element selected from the group consisting of Mn, Al, Ni, Co, Ti, Ga, Cu, V, Nb, Zr, Ce, In, Zn, and Y, X is at least one element selected from the group consisting of F, Cl, Br, I, At, N, and S, and a, b, x are in the ranges of 0≤a≤0.1, 0≤b≤0.1, 0<x≤0.9, respectively.

In exemplary embodiments, the first positive electrode active material has a nickel molar fraction of 60% or more and less than 70%.

In exemplary embodiments, in Chemical Formula 2, M is manganese, and a molar ratio of manganese to iron is 50:50 to 70:30.

In exemplary embodiments, the main additive is included in a range of 0.001 to 2 wt% based on a total weight of the electrolyte.

In exemplary embodiments, the main additive is 1,3-propane sultone.

In exemplary embodiments, the 1,3-propane sultone is included in a range of 0.25 to 1.75 wt% based on a total weight of the electrolyte.

In exemplary embodiments, the main additive is lithium bis(oxalate)borate.

In exemplary embodiments, the lithium bis(oxalate)borate is included in a range of 0.1 wt% to 1.5 wt% based on a total weight of the electrolyte.

In exemplary embodiments, a weight ratio of the first positive electrode active material to the second positive electrode active material is in a range of 4:6 to 9:1.

In exemplary embodiments, the negative electrodeincludes natural graphite and/or artificial graphite as a negative electrode active material.

### [Advantageous Effects]

According to the present disclosure, a lithium secondary battery is provided in which the decrease in energy retention rate is mitigated when operated in a voltage range exceeding 4.35V.

Furthermore, according to the present disclosure, a lithium secondary battery capable of instantiating high energy density and high-temperature safety is provided.

### [Best Mode for Carrying out the Invention]

The following provides a more detailed description of the present disclosure to aid in understanding the present disclosure.

The terms and words used in this specification and the claims should not be interpreted as limited to their conventional or dictionary meanings, but should be interpreted in accordance with the technical concepts of the disclosure, based on the principle that the inventor may appropriately define the concepts of the terms to describe the disclosure in the best possible manner.

The terms used in this specification are merely used to describe exemplary embodiments and are not intended to limit the scope of the disclosure. Unless the context clearly indicates otherwise, singular expressions include plural expressions.

In this specification, terms such as "include," "comprise," or "have" are intended to designate the existence of implemented features, numbers, steps, components, or combinations thereof, and should be understood not to preclude possibility of the existence or addition of one or more other features, numbers, steps, components, or combinations thereof.

In this specification, the description "A and/or B" means "A or B or both."

In this specification, "%" means wt% unless explicitly indicated otherwise.

In this specification, the average particle diameter (D₅₀) refers to the particle diameter corresponding to 50% of the volume cumulative amount in the particle size distribution curve. The D₅₀ can be measured, for example, using a laser diffraction method. The laser diffraction method can generally measure particle sizes from the submicron range to several millimeters and can obtain results with high reproducibility and high resolution.

In this specification, "specific surface area" is measured by the BET method, specifically calculated from the amount of nitrogen gas adsorbed at liquid nitrogen temperature (77K) using BELSORP-mini II from BEL Japan.

The lithium secondary battery according to exemplary embodiments of the present disclosure is a lithium secondary battery including a positive electrode; a negative electrode; a separator; and an electrolyte, wherein the electrolyte contains 1,3-propane sultone (PS) and/or lithium bis(oxalate)borate (LiBOB) as a main additive, and the full charge voltage exceeds 4.35V. In this specification, the full charge voltage refers to the potential of the battery when the SOC (State of Charge) of the battery is 100%.

The inventors of the present disclosure discovered that when the electrolyte in a lithium secondary battery contains 1,3-propane sultone or lithium bis(oxalate)borate, the energy retention rate of the lithium secondary battery is improved in a voltage range exceeding 4.35V compared to when the electrolyte does not contain these additives, leading to the present disclosure. Although 1,3-propane sultone and lithium bis(oxalate)borate are known as additives that can be included in electrolytes, the present disclosure is significant in that it is based on the technical idea that these additives improve the life characteristics of lithium secondary batteries in a voltage range exceeding 4.35V.

Hereinafter, the components of the lithium secondary battery according to the present disclosure will be described in detail.

### Positive electrode

The positive electrode according to exemplary embodiments includes a positive electrode current collector; and a positive electrode active material layer provided on at least one surface of the positive electrode current collector and including a positive electrode active material. The positive electrode active material layer is a layer that instantiates the electrical activity of the positive electrode and mainly contains a positive electrode active material that instantiates electrochemical oxidation-reduction reactions during charging and discharging of the battery. Specifically, the positive electrode active material may be included in an amount of 80 wt% to 99.8 wt% based on the total weight of the positive electrode active material layer, and specifically may be included in amounts of 95 wt% or more, 98 wt% or more, 84 wt% to 99.8 wt%, 90 wt% to 99.8 wt%, 94 wt% to 99.8 wt%, 88 wt% to 96 wt%, or 92 wt% to 97.5 wt%.

The positive electrode may include both a first positive electrode active material and a second positive electrode active material. The first positive electrode active material may be a lithium composite metal oxide having a layered crystal structure. The second positive electrode active material may be a lithium transition metal phosphate having an olivine structure. In exemplary embodiments, the first positive electrode active material may be a compound represented by Chemical Formula 1 below. In exemplary embodiments, the second positive electrode active material may be a compound represented by Chemical Formula 2 below.

[Chemical Formula 1] Li_{1+y}NiₚCo_{q}MnᵣM¹_{-(p+q+r)}O_{2-z}A_{z}

[Chemical Formula 2] Li₁₊ₐMₓFe₁₋ₓ(PO_{4-b})X_{b}

In Chemical Formula 1,
M¹ is at least one selected from the group consisting of Cu, Ti, Mg, Al, Pt, and Zr, A is an oxygen-substituted halogen, and 0≤y≤0.5, 0.4≤p≤1, 0≤q≤0.6, 0≤r≤0.6, 0.9≤p+q+r≤1, and 0≤z≤0.001.

In Chemical Formula 2,
M is at least one element selected from the group consisting of Mn, Al, Ni, Co, Ti, Ga, Cu, V, Nb, Zr, Ce, In, Zn, and Y, X is at least one element selected from the group consisting of F, Cl, Br, I, At, N, and S, and a, b, x are in the ranges of 0≤a≤0.1, 0≤b≤0.1, 0<x≤0.9, respectively.

The first positive electrode active material is a lithium composite metal oxide having a layered crystal structure, which facilitates lithium ion storage and has a high lithium ion diffusion rate, making it applicable to positive electrode active materials of high-capacity/high-power secondary batteries. However, compounds with a layered crystal structure have low chemical and structural stability and can be easily decomposed under high-temperature conditions. This acts as a factor that reduces the safety of secondary batteries.

On the other hand, the second positive electrode active material is a lithium transition metal phosphate having an olivine crystal structure, which has a hexahedral crystalline form in which phosphorus (P) and oxygen (O) are strongly bonded, exhibiting high structural stability. As a result, lithium transition metal phosphates having an olivine crystal structure can easily maintain their crystal structure even when all lithium ions are deintercalated during charging, and the crystal structure does not easily decompose even under high-temperature conditions.

According to the present disclosure, since the positive electrode includes both a lithium composite metal oxide having a layered crystal structure and a lithium transition metal phosphate having an olivine structure as positive electrode active materials, the limitations of metal oxides having different crystal structures can be complemented or mitigated, thereby further improving the safety and electrical performance of the positive electrode.

Meanwhile, traditional lithium transition metal phosphates have low energy density, which represents the amount of energy a battery can store per unit weight/volume. To compensate for this disadvantage, in the present disclosure, a compound represented by Chemical Formula 2 can be selected among transition metal phosphates having an olivine crystal structure. The compound represented by Chemical Formula 2 is one in which part of the iron in conventional lithium transition metal phosphates is substituted with metals such as manganese, and has a high operating voltage, enabling high energy density instantiation compared to conventional lithium transition metal phosphates. Therefore, it is preferred as a positive electrode active material for lithium secondary batteries of the present disclosure that must be charged to a voltage range exceeding 4.35V.

In a preferred embodiment, M in Chemical Formula 2 may be manganese. Such lithium manganese iron phosphate may have a molar ratio of manganese to iron of 50:50 to 70:30, preferably 55:45 to 65:35, to instantiate high energy density.

The second positive electrode active material may have a predetermined size. For example, the average particle diameter (D₅₀) may be 0.5 µm to 10 µm, specifically 0.5 µm to 8 µm; 0.5 µm to 6 µm; 0.5 µm to 4 µm; 0.5 µm to 2 µm; 1 µm to 5 µm; 2 µm to 4 µm; 4 µm to 8 µm; 5 µm to 9 µm; 3 µm to 6 µm; 0.5 µm to 1.5 µm; or 0.7 µm to 1.4 µm.

By adjusting the average particle diameter (D₅₀) of the second positive electrode active material to the above-mentioned range, the present disclosure can prevent positive electrode active materials from agglomerating due to a particle diameter lower than the lower limit of the range, which would deteriorate processability during positive electrode manufacturing and reduce positive electrode reliability. In addition, it can prevent problems of electrical performance degradation due to damage to positive electrode active materials such as cracking during the rolling process caused by a particle diameter higher than the upper limit of the range.

Furthermore, the second positive electrode active material may have a structure in which a carbon layer is coated on the surface. The carbon layer may have a porous structure with high surface area and may uniformly surround the core surface with high crystallinity. A carbon layer with such a structure can further enhance the electrochemical reactivity and electrical properties of the positive electrode active material, thereby improving the output and life characteristics of the positive electrode.

Here, the thickness of the carbon layer can be controlled within a range that does not reduce the energy density of the positive electrode active material. Specifically, the carbon layer may have an average thickness of 50 nm or less, more specifically 40 nm or less; 30 nm or less; 20 nm or less; 10 nm or less; 5 nm to 40 nm; 5 nm to 20 nm; 10 nm to 30 nm; 20 nm to 45 nm; 10 nm to 20 nm; 5 nm to 10 nm; 1 nm to 10 nm; or 3 nm to 9 nm.

The lithium composite metal oxide having a layered structure represented by Chemical Formula 1 is a metal oxide containing nickel (Ni), cobalt (Co), and manganese (Mn) together with lithium, and may have a form in which other transition metals (M¹) are doped. For example, the lithium composite metal oxide may include at least one of Li(Ni_{0.6}Co_{0.2}Mn_{0.2})O₂, Li(Ni_{1/3}Co_{1/3}Mn_{1/3})O₂, Li(Ni_{0.8}Co_{0.1}Mn_{0.1})O₂, Li(Ni_{0.5}Co_{0.2}Mn_{0.3})O₂, Li(Ni_{0.6}Co_{0.2}Mn_{0.1}Zr_{0.1})O₂, Li(Ni_{0.6}Co_{0.2}Mn_{0.15}Zr_{0.05})O₂, Li(Ni_{0.7}Co_{0.1}Mn_{0.1}Zr_{0.1})O₂, Li(Ni_{0.6}Co_{0.2}Al_{0.2})O₂, Li(Ni_{0.7}Co_{0.15}Al_{0.15})O₂, Li(Ni_{0.8}Co_{0.1}Al_{0.1})O₂, Li(Ni_{0.9}Co_{0.05}Al_{0.05})O₂, Li(Ni_{0.6}Co_{0.2}Al_{0.1}Zr_{0.1})O₂, Li(Ni_{0.6}Co_{0.2}Al_{0.15}Zr_{0.05})O₂, and Li(Ni_{0.7}Co_{0.1}Al_{0.1}Zr_{0.1})O₂.

In a preferred embodiment, the first positive electrode active material may have a nickel molar fraction of 60% or more and less than 70%. In this case, there is an advantage of excellent thermal safety compared to when the nickel molar fraction is 70% or more.

The first positive electrode active material may have a predetermined size. For example, the average particle diameter (D₅₀) may be 2 µm to 10 µm, specifically 2.5 µm to 9 µm; 3 µm to 8.5 µm; 3 µm to 8 µm; 3.5 µm to 7.5 µm; 3 µm to 6 µm; 2 µm to 4 µm; 4 µm to 8 µm; 5 µm to 9 µm; 3 µm to 6 µm; 2.5 µm to 3.5 µm; or 3.5 µm to 6 µm.

If the average particle diameter (D₅₀) of the first positive electrode active material is less than 2 µm, the specific surface area relatively increases and electrolyte side reactions intensify, which is undesirable in terms of life performance. If the average particle diameter (D₅₀) of the first positive electrode active material exceeds 10 µm, the diffusion path of lithium ions becomes longer, which is undesirable in terms of resistance and output characteristics.

The BET specific surface area of the first positive electrode active material may be 0.2 m²/g to 3 m²/g, specifically 0.4 m²/g to 1 m²/g, more specifically 0.7 m²/g to 1 m²/g. When in this range, it is desirable in terms of suppressing gas generation due to positive electrode surface side reactions.

The first positive electrode active material and the second positive electrode active material may each be single crystal particles. Cracks may occur in particles during the rolling process to manufacture the positive electrode and during the charging and discharging process of the manufactured positive electrode, and as charging and discharging are repeated, the particles may be destroyed due to these cracks. Such particle destruction increases the amount of gas generated in the battery and reduces the charge-discharge cycle, leading to reduced life. When the first and second positive electrode active materials are single crystal particles, the particles are not easily broken during the rolling process and charging and discharging process, which is desirable in terms of battery life characteristics.

Here, single crystal particles refer to those consisting of primary particles rather than secondary particles, meaning single-particle primary structures.

The weight ratio of the first positive electrode active material to the second positive electrode active material may be in the range of 4:6 to 9:1, preferably 45:55 to 8:2, more preferably 5:5 to 7:3. When the weight ratio of the first positive electrode active material to the second positive electrode active material is in this range, it is possible to instantiate a battery with high energy density, and the full charge voltage of the battery can exceed 4.35V.

Meanwhile, the positive electrode active material layer may optionally further include a binder, a conductive material, and other additives, together with the positive electrode active material as the main component.

The binder is a component that assists in the coupling of the positive electrode active material and the conductive material and the coupling to the current collector, and can be appropriately applied within a range that does not reduce the electrical properties of the positive electrode. Specifically, it may include at least one of vinylidene fluoride-hexafluoropropylene copolymer (PVDF-co-HFP), polyvinylidene fluoride (PVdF), polyacrylonitrile, polymethyl methacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylic acid, ethylene-propylene-diene monomer, sulfonated ethylene-propylene-diene monomer, styrene butadiene rubber (SBR), and fluororubber.

The content of the binder may be 0.1 to 10 parts by weight based on 100 parts by weight of the total positive electrode active material layer, specifically 0.1 to 8 parts by weight, 0.1 to 5 parts by weight, 0.1 to 3 parts by weight, or 2 to 6 parts by weight. By controlling the content of the binder contained in the positive electrode active material layer to the above range, the present disclosure can prevent the adhesion of the active material layer from being reduced due to a low content of binder or the electrical properties of the positive electrode from being reduced due to an excessive amount of binder.

The conductive material may include at least one of acetylene black, Denka black, Ketjen black, Super-P, channel black, furnace black, lamp black, thermal black, graphene, carbon nanotubes, and carbon fibers, but is not limited thereto.

The content of the conductive material may be 0.1 to 10 parts by weight based on 100 parts by weight of the total electrode active material layer, specifically 0.1 to 8 parts by weight, 0.1 to 5 parts by weight, 0.1 to 3 parts by weight, 2 to 6 parts by weight, or 0.5 to 2 parts by weight. By controlling the content of the conductive material to the above range, the present disclosure can prevent the charge capacity from being reduced due to increased electrode resistance caused by a low content of conductive material, and can prevent problems of reduced charge capacity due to decreased active material content caused by excessive conductive material or deteriorated rapid charging characteristics due to increased loading amount of the active material layer.

The average thickness of the positive electrode active material layer may be 50 µm to 500 µm. Specifically, the average thickness of the positive electrode active material layer may be 100 µm to 400 µm; 200 µm to 350 µm; 50 µm to 180 µm; 80 µm to 150 µm; 100 µm to 250 µm; 100 µm to 250 µm; or 130 µm to 190 µm. By adjusting the average thickness of the positive electrode active material layer to this range, the present disclosure can not only instantiate high adhesion between the positive electrode active material layer and the positive electrode current collector but also instantiate high energy density of the positive electrode.

Furthermore, the positive electrode current collector may use materials that do not cause chemical changes in the battery while having high conductivity. For example, stainless steel, aluminum, nickel, titanium, calcined carbon, etc. can be used, and in the case of aluminum or stainless steel, those surface-treated with carbon, nickel, titanium, silver, etc. may be used. In addition, the average thickness of the current collector can be appropriately applied in the range of 3 to 500 µm considering the conductivity and total thickness of the positive electrode to be manufactured.

The positive electrode can be manufactured according to a conventional positive electrode manufacturing method. For example, the positive electrode can be manufactured by dissolving or dispersing the components constituting the positive electrode active material layer, namely, the positive electrode active material, conductive material, binder, etc., in a solvent to prepare a positive electrode slurry, coating the positive electrode slurry on at least one surface of the positive electrode current collector, and then drying and rolling, or by casting the positive electrode slurry on a separate support, peeling off the film obtained from this support, and laminating it on the positive electrode current collector.

The solvent may be a solvent generally used in the art, and may include dimethyl sulfoxide (DMSO), isopropyl alcohol, N-methylpyrrolidone (NMP), dimethylformamide (DMF), acetone, or water, and one or a mixture of two or more of these may be used. The amount of the solvent used is sufficient if it dissolves or disperses the positive electrode active material, conductive mateiral, binder, and dispersant in consideration of the coating thickness and manufacturing yield of the slurry, and has a viscosity that can exhibit excellent thickness uniformity during coating for subsequent positive electrode manufacturing.

### Negative electrode

The negative electrode according to exemplary embodiments includes a negative electrode current collector; and a negative electrode active material layer provided on at least one surface of the negative electrode current collector and containing a negative electrode active material. The negative electrode active material layer is a layer that instantiates the electrical activity of the negative electrode and mainly contains a negative electrode active material that instantiates electrochemical oxidation-reduction reactions during charging and discharging of the battery. Specifically, the negative electrode active material may be included in an amount of 80 wt% to 99.8 wt% based on the total weight of the negative electrode active material layer, specifically 95 wt% or more, 98 wt% or more, 84 wt% to 99.8 wt%, 90 wt% to 99.8 wt%, 94 wt% to 99.8 wt%, 88 wt% to 96 wt%, or 92 wt% to 97.5 wt%.

As the negative electrode active material, compounds capable of reversible intercalation and deintercalation of lithium can be used. Specific examples include carbonaceous materials such as artificial graphite, natural graphite, graphitized carbon fiber, and amorphous carbon; metallic materials capable of alloying with lithium such as Si, Al, Sn, Pb, Zn, Bi, In, Mg, Ga, Cd, Si alloys, Sn alloys, or Al alloys; metal oxides capable of doping and dedoping lithium such as SiOᵥ(0<v<2), SnO2, vanadium oxide, and lithium vanadium oxide; or composites including the metallic materials and carbonaceous materials such as Si-C composites or Sn-C composites, and any one or a mixture of two or more of these may be used. In addition, a lithium metal thin film may be used as the negative electrode active material. Also, as carbonaceous materials, both low-crystalline carbon and highly crystalline carbon can be used. Soft carbon and hard carbon are representative low-crystalline carbons, and highly crystalline carbons are represented by high-temperature calcined carbons such as amorphous, plate-like, flake-like, spherical, or fibrous natural graphite or artificial graphite, Kish graphite, pyrolytic carbon, mesophase pitch-based carbon fiber, meso-carbon microbeads, mesophase pitches, and petroleum or coal tar pitch-derived cokes. In particular, when natural graphite and/or artificial graphite are included as the negative electrode active material, it is desirable in terms of capacity characteristics and life characteristics.

The negative electrode active material layer may optionally further include a negative electrode binder, a negative electrode conductive material, and/or a thickener in addition to the negative electrode active material described above.

The negative electrode binder may include at least one selected from polyvinylidene fluoride (PVDF), polyvinyl alcohol, carboxymethyl cellulose (CMC), starch, hydroxypropyl cellulose, regenerated cellulose, polyvinylpyrrolidone, tetrafluoroethylene, polyethylene, polypropylene, ethylene-propylene-diene polymer (EPDM), sulfonated-EPDM, styrene-butadiene rubber, and fluororubber, preferably at least one selected from polyvinylidene fluoride and styrene-butadiene rubber.

The negative electrode binder is a component that assists in coupling between the active material and/or the current collector, and can typically be included in the negative electrode active material layer in an amount of 1 wt% to 30 wt%, preferably 1 wt% to 10 wt%.

As the thickener, all thickeners used in conventional lithium secondary batteries can be used, and one example is carboxymethyl cellulose (CMC).

The negative electrode conductive material is not particularly limited as long as it has conductivity without causing chemical changes in the battery. For example, graphite such as natural graphite or artificial graphite; carbon blacks such as acetylene black, Ketjen black, channel black, furnace black, lamp black, and thermal black; carbon nanotubes; conductive fibers such as carbon fiber or metal fiber; fluorinated carbon powders; metal powders such as aluminum, and nickel powder; conductive whiskers such as zinc oxide and potassium titanate; conductive metal oxides such as titanium oxide; and conductive materials such as polyphenylene derivatives can be used.

The negative electrode conductive material can typically be included in the negative electrode active material layer in an amount of 0 wt% to 30 wt%, preferably 1 wt% to 10 wt%.

The negative electrode can be manufactured according to a conventional negative electrode manufacturing method generally known in the art. For example, the negative electrode can be manufactured by dissolving or dispersing the components constituting the negative electrode active material layer, namely, the negative electrode active material, negative electrode conductive material, and/or negative electrode binder, in a solvent to prepare a negative electrode slurry, coating the negative electrode slurry on at least one surface of the negative electrode current collector, and then drying and rolling, or by casting the negative electrode slurry on a separate support, peeling off the film obtained from this support, and laminating it on the negative electrode current collector.

### Separator

In a lithium secondary battery, the separator separates the positive electrode and negative electrode and provides a passage for lithium ion movement. In the present disclosure, the separator can be used without particular limitation as long as it is commonly used as a separator in secondary batteries, and it is particularly preferable that it has low resistance to ion movement in the electrolyte and excellent electrolyte wetting ability. Specifically, porous polymer films, for example, porous polymer films made of polyolefin-based polymers such as ethylene homopolymer, propylene homopolymer, ethylene/butene copolymer, ethylene/hexene copolymer, and ethylene/methacrylate copolymer, or laminated structures of two or more layers thereof can be used. Also, conventional porous nonwoven fabrics, for example, nonwoven fabrics made of high-melting-point glass fiber, polyethylene terephthalate fiber, etc. may be used. In addition, coated separators containing ceramic components or polymer materials may be used to ensure heat resistance or mechanical strength, and may be optionally used in a single-layer or multi-layer structure.

### Electrolyte

The electrolyte includes an organic solvent; a lithium salt; and additives.

As the organic solvent, any solvent that can serve as a medium through which ions involved in the electrochemical reaction of the battery can move can be used without particular limitation. Specifically, the organic solvent may include ester-based solvents such as methyl acetate, ethyl acetate, γ-butyrolactone, and ε-caprolactone; ether-based solvents such as dibutyl ether or tetrahydrofuran; ketone-based solvents such as cyclohexanone; aromatic hydrocarbon-based solvents such as benzene and fluorobenzene; carbonate-based solvents such as dimethyl carbonate (DMC), diethyl carbonate (DEC), methyl ethyl carbonate (MEC), ethyl methyl carbonate (EMC), ethylene carbonate (EC), and propylene carbonate (PC); alcohol-based solvents such as ethyl alcohol and isopropyl alcohol; nitriles such as Ra-CN (Ra is a linear, branched, or cyclic hydrocarbon group having 2 to 20 carbon atoms and may contain a double bond aromatic ring or ether bond); amides such as dimethylformamide; dioxolanes such as 1,3-dioxolane; or sulfolanes. Among these, carbonate-based solvents are preferred, and a mixture of cyclic carbonates (for example, ethylene carbonate or propylene carbonate, etc.) having high ionic conductivity and high dielectric constant that can enhance the charge and discharge performance of the battery, and low-viscosity linear carbonate compounds (for example, ethyl methyl carbonate, dimethyl carbonate, or diethyl carbonate, etc.) is more preferred. In this case, mixing the cyclic carbonate and chain carbonate in a volume ratio of about 1:1 to 9 can result in excellent electrolyte performance.

The lithium salt can be used without particular limitation as long as it is a compound capable of providing lithium ions used in lithium secondary batteries. Specifically, the lithium salt may be LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂. LiCl, LiI, or LiB(C₂O₄)₂. Among these, when the lithium salt is LiPF₆, a synergistic effect can be exhibited in the capacity retention improvement effect by the main additive described below. The concentration of the lithium salt is preferably used within the range of 0.1M to 2.0M. If the concentration of the lithium salt is within this range, the electrolyte can have appropriate conductivity and viscosity, thus exhibiting excellent electrolyte performance, and lithium ions can move effectively.

The additive according to the present disclosure is a main additive, wherein the main additive includes 1,3-propane sultone (PS) and/or lithium bis(oxalate)borate (LiBOB).

Generally, electrolytes include additives to form a solid electrolyte interphase (SEI) on the negative electrode surface, and such additives include vinylene carbonate, vinyl ethylene carbonate, fluoroethylene carbonate, difluoroethylene carbonate, 1,3-propane sultone, and lithium bis(oxalate)borate.

In a lithium secondary battery including the first and second positive electrode active materials as positive electrode active materials, 1,3-propane sultone and lithium bis(oxalate)borate have no or minimal effect on improving the energy retention rate of the battery in a voltage range of 4.35V or below, but can improve the energy retention rate of the battery in a voltage range exceeding 4.35V. Therefore, it is preferable that the lithium secondary battery of the present disclosure has a full charge voltage exceeding 4.35V, specifically in the range of 4.4V to 4.6V, more specifically in the range of 4.4V to 4.55V, and by charging in this range, energy density can be increased to raise the average discharge voltage.

The main additive may be in the range of 0.001 wt% to 2 wt%, specifically 0.01 wt% to 1.5 wt%, based on the total weight of the electrolyte. When the main additive is 1,3-propane sultone, 1,3-propane sultone may be included in the range of 0.001 to 2 wt%, preferably 0.25 wt% to 1.75 wt%, more preferably 0.5 wt% to 1.5 wt%, most preferably 0.75 to 1.25 wt% based on the total weight of the electrolyte. When the main additive is lithium bis(oxalate)borate, lithium bis(oxalate)borate may be included in the range of 0.001 to 2 wt%, preferably 0.1 wt% to 1.5 wt%, more preferably 0.2 wt% to 1.0 wt%, most preferably 0.3 to 0.7 wt% based on the total weight of the electrolyte. When the main additive is included in the above content range, the energy retention rate of the battery can be improved while initial resistance characteristics and output performance can be appropriately maintained.

The lithium secondary battery according to the present disclosure has excellent high-temperature safety while instantiating a battery with high energy density by having the above-described configuration. In addition, it has excellent energy retention rate, enabling instantiation of a long-life battery.

Hereinafter, the present disclosure will be described in more detail by examples and comparative examples.

However, the following examples and comparative examples are merely illustrative of the present disclosure, and the content of the present disclosure is not limited to the following examples and comparative examples.

### Preparation Example 1: Preparation of Lithium Secondary Battery

LiNi_{0.6}Co_{0.1}Mn_{0.3}O₂ was prepared as the first positive electrode active material, and LiMn_{0.6}Fe_{0.4}PO₄ was prepared as the second positive electrode active material. At this time, the weight ratio of the first positive electrode active material to the second positive electrode active material was 5:5. N-methylpyrrolidone solvent was added to a homo mixer, and 97.2 parts by weight of the prepared positive electrode active material; 0.7 parts by weight of carbon nanotubes as a conductive material; and 2.1 parts by weight of polyvinylidene fluoride (PVdF) as a binder were added. The prepared positive electrode slurry was coated on an aluminum current collector, then dried and rolled to manufacture a positive electrode.

Water solvent was added to a homo mixer, and artificial graphite as a negative electrode active material, styrene-butadiene rubber as a binder, and carboxymethyl cellulose (CMC) as a thickener were added in a weight ratio of 98:1:1. The prepared negative electrode slurry was coated on a copper current collector, then dried and rolled to manufacture a negative electrode.

Ethylene carbonate (EC):dimethyl carbonate (DMC):ethyl methyl carbonate (EMC) were mixed in a volume ratio of 20:75:5, and then LiPF₆ was dissolved to 1.25M to prepare a non-aqueous organic solution. And 1,3-propane sultone (PS) was added in an amount of 1.0 wt% based on the total weight of the non-aqueous organic solution to prepare an electrolyte.

An electrode assembly was manufactured by interposing a polyethylene porous separator between the positive electrode and the negative electrode. The electrode assembly was stored in a pouch-type battery case, and the electrolyte was injected to assemble a lithium secondary battery.

The assembled lithium secondary battery was pre-aged for 1 day at room temperature (22±2°C), then charged at 0.1C until reaching 60% state of charge (SOC) for activation. Then, each activated lithium secondary battery was aged for 1 day each at room temperature (22±2°C) and 60°C to complete the manufacture of the lithium secondary battery.

### Preparation Example 2: Preparation of Lithium Secondary Battery

A lithium secondary battery was manufactured in the same manner as Preparation Example 1, except that lithium bis(oxalate)borate (LiBOB) was added at 0.5 wt% instead of 1,3-propane sultone during the preparation of the electrolyte in Preparation Example 1.

### Preparation Example 3: Preparation of Lithium Secondary Battery

A lithium secondary battery was manufactured in the same manner as Preparation Example 1, except that 1,3-propane sultone was not added during the preparation of the electrolyte in Preparation Example 1.

### Preparation Example 4: Preparationof Lithium Secondary Battery

A lithium secondary battery was manufactured in the same manner as Preparation Example 1, except that vinylene carbonate (VC) was added at 1 wt% instead of 1,3-propane sultone during the preparation of the electrolyte in Preparation Example 1.

### Examples 1 to 6, Comparative Examples 1 to 6

Each lithium secondary battery from Preparation Examples 1 to 3 was repeatedly charged and discharged for 200 cycles under the following charge-discharge conditions. During charging, the full charge voltage was set to the voltage described in Table 1 below.
[Charging] 0.33C CC/CV, full charge voltage and 0.05C cut-off
[Discharging] 0.5C CC, 2.5V cut-off

The capacity retention rate was calculated from the discharge capacity measured in the first charge-discharge cycle and the discharge capacity measured in the 200^{th} charge-discharge cycle, and the results are shown in Table 1. 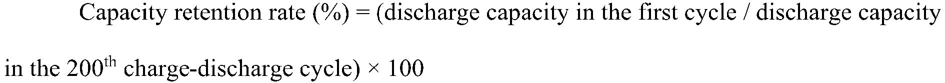 Capacity retention rate (%) = (discharge capacity in the first cycle / discharge capacity in the 200th charge-discharge cycle) × 100

**[Table 1]**

| | **Type of Lithium Secondary Battery** | **Type of Additive** | **Full Charge Voltage (V)** | **Capacity Retention Rate (%)** |
|---|---|---|---|---|
| **Comparative Example 1** | Preparation Example 1 | PS | 4.35 | 94.6 |
| **Comparative Example 2** | Preparation Example 2 | LiBOB | | 94.8 |
| **Comparative Example 3** | Preparation Example 3 | - | | 94.7 |
| **Example 1** | Preparation Example 1 | PS | 4.4 | 90.6 |
| **Example 2** | Preparation Example 2 | LiBOB | | 92.1 |
| **Comparative Example 4** | Preparation Example 3 | - | | 90.3 |
| **Example 3** | Preparation Example 1 | PS | 4.45 | 86.9 |
| **Example 4** | Preparation | LiBOB | | 88.1 |
| | Example 2 | | | |
| **Comparative Example 5** | Preparation Example 3 | - | | 86.8 |
| **Example 5** | Preparation Example 1 | PS | 4.5 | 81.4 |
| **Example 6** | Preparation Example 2 | LiBOB | | 82.5 |
| **Comparative Example 6** | Preparation Example 3 | - | | 80.8 |
| **Comparative Example 7** | Preparation Example 4 | VC | | 80.7 |

Referring to Table 1, when the operating voltage of the battery is 4.35V or below, even if the battery contains PS or LiBOB, there is no increase in capacity retention rate compared to batteries that do not contain these additives, or the capacity retention rate is at a similar level.

On the other hand, when the battery contains PS or LiBOB and the operating voltage of the battery is in the range of 4.4 to 4.5V, these additives exhibit the effect of improving the capacity retention rate of the battery. Therefore, in a lithium secondary battery with a full charge voltage exceeding 4.35V, if PS and/or LiBOB are selected as the main additive of the electrolyte, it is expected that the capacity retention rate of the lithium secondary battery can be improved to instantiate a long-life battery.

The present disclosure has been described in more detail above with reference to the drawings and embodiments. However, it should be understood that the configurations described in the drawings or embodiments are only one embodiment of the disclosure and do not represent all of the technical ideas of the disclosure, and that there may be various equivalents and modifications that may be substituted for them at the time of filing the present application.

## Claims

1. A lithium secondary battery comprising a positive electrode; a negative electrode; a separator; and an electrolyte, wherein
the electrolyte comprises 1,3-propane sultone (PS) and/or lithium bis(oxalate)borate (LiBOB) as a main additive, and
a full charge voltage exceeds 4.35V.

2. The lithium secondary battery of claim 1, wherein
the full charge voltage is in a range of 4.4V to 4.5V.

3. The lithium secondary battery of claim 1, wherein
the positive electrode comprises a first positive electrode active material and a second positive electrode active material, wherein
the first positive electrode active material is a lithium composite metal oxide having a layered crystal structure, and the second positive electrode active material is a lithium transition metal phosphate having an olivine structure.

4. The lithium secondary battery of claim 3, wherein
the first positive electrode active material is a compound represented by the following Chemical Formula 1:
[Chemical Formula 1] Li_{1+y}NiₚCo_{q}MnᵣM¹_{-(p+q+r)}O_{2-z}A_{z}
In Chemical Formula 1,
M¹ is at least one selected from the group consisting of Cu, Ti, Mg, Al, Pt, and Zr, A is an oxygen-substituted halogen, and 0≤y≤0.5, 0.4≤p≤1, 0≤q≤0.6, 0≤r≤0.6, 0.9≤p+q+r≤1, and 0≤z≤0.001.

5. The lithium secondary battery of claim 3, wherein
the second positive electrode active material is a compound represented by the following Chemical Formula 2:
[Chemical Formula 2] Li₁₊ₐMₓFe₁₋ₓ(PO_{4-b})X_{b}
In Chemical Formula 2,
M is at least one element selected from the group consisting of Mn, Al, Ni, Co, Ti, Ga, Cu, V, Nb, Zr, Ce, In, Zn, and Y, X is at least one element selected from the group consisting of F, Cl, Br, I, At, N, and S, and a, b, x are in the ranges of 0≤a≤0.1, 0≤b≤0.1, 0<x≤0.9, respectively.

6. The lithium secondary battery of claim 4, wherein
the first positive electrode active material has a nickel molar fraction of 60% or more and less than 70%.

7. The lithium secondary battery of claim 5, wherein
in Chemical Formula 2, M is manganese, and
a molar ratio of manganese to iron is 50:50 to 70:30.

8. The lithium secondary battery of claim 1, wherein
the main additive is included in a range of 0.001 to 2 wt% based on a total weight of the electrolyte.

9. The lithium secondary battery of claim 1, wherein
the main additive is 1,3-propane sultone.

10. The lithium secondary battery of claim 9, wherein
the 1,3-propane sultone is included in a range of 0.25 to 1.75 wt% based on a total weight of the electrolyte.

11. The lithium secondary battery of claim 1, wherein
the main additive is lithium bis(oxalate)borate.

12. The lithium secondary battery of claim 11, wherein
the lithium bis(oxalate)borate is included in a range of 0.1 wt% to 1.5 wt% based on a total weight of the electrolyte.

13. The lithium secondary battery of claim 1, wherein
a weight ratio of the first positive electrode active material to the second positive electrode active material is in a range of 4:6 to 9:1.

14. The lithium secondary battery of claim 1, wherein
the negative electrode comprises natural graphite and/or artificial graphite as a negative electrode active material.
